# EUROPEAN PATENT APPLICATION

(11) **EP 3 434 717 A1**
(43) Date of publication of application: **30.01.2019**
(21) Application number: 17769652.3
(22) Date of filing: 27.01.2017
(51) Int. Cl.: C08J 5/04, C09J 7/02, C09J 121/00, C09J 123/00, C09J 201/00

(54) **CARBON FIBER SHEET FOR REINFORCEMENT**

(30) Priority: 25.03.2016 JP 2016061498
(71) Applicant: Kurashiki Boseki Kabushiki Kaisha, Kurashiki-shi, Okayama 710-0054 (JP)
(72) Inventor: HIRAISHI Yoichi, OSAKA 541-8581 (JP); HORIMOTO Wataru, OSAKA 572-0823 (JP); TANAKA Tadaharu, OSAKA 541-8581 (JP)
(74) Representative: Diehl & Partner GbR
(86) International application number: PCT/JP2017/003004
(87) International publication number: WO 2017/163605

(57) **Abstract**

A reinforcing carbon fiber sheet (1) of the present invention includes: a carbon fiber filament (2) group arrayed in parallel in one direction; and a thermoplastic adhesive (4) present on at least part of the carbon fiber filament group in a direction across the carbon fiber filament group to unite the carbon fiber filament group. Preferably, the reinforcing sheet (1) includes a minimum amount of the carbon fibers required to produce a reinforcing effect. A sizing layer (3) of an epoxy-based resin is present on the surface of the carbon fiber filaments (2), and has a high affinity for the thermoplastic adhesive layer (4) present thereon, so that they strongly adhere to each other. Thus, the present invention provides a reinforcing carbon fiber sheet that is thin, has good handling properties and easily adheres to a substance to be reinforced.

## Description

### Technical Field

The present invention relates to a reinforcing carbon fiber sheet in which a carbon fiber filament group arrayed in one direction is united by a thermoplastic adhesive.

### Background Art

Carbon fibers are well known as reinforcing fibers of, e.g., carbon fiber reinforced plastics. The carbon fiber reinforced plastics using carbon fibers have the advantages of high strength and being lightweight, and therefore have been widely used in various sporting goods such as golf club shafts and fishing rods, aircraft, automobiles, and pressure vessels, and are also expected to find future applications. As conventional techniques, Patent Documents 1-2 propose reinforcement fiber sheets that include: a sheet-like support in which a reinforcing fiber bundle (e.g., carbon fibers) is aligned in one direction; and a nonwoven fabric containing a low-melting point polymer that is adhered to the sheet-like support. Patent Document 3 proposes stacking a thermoplastic resin layer on one surface of a fiber-reinforced resin sheet that includes carbon fibers and a thermosetting resin, and subjecting it to vacuum molding.

### Prior Art Documents

### Patent Documents

Patent Document 1: JP H11(1999)-000959 A
Patent Document 2: JP 2000-198158 A
Patent Document 3: JP 2009-184239 A

### Disclosure of Invention

Problem to be Solved by the Invention

However, in such conventional reinforcing sheets, since carbon fiber bundles are arrayed as they are in one direction, there are problems of poor handling properties of the reinforcing sheets due to the thickness, a significant increase in the thickness of substances to be reinforced, etc.

In order to solve the above conventional problems, the present invention provides a reinforcing carbon fiber sheet that is thin, has good handling properties and thermoplasticity and thus easily adheres to a substance to be reinforced when heated.

### Means for Solving Problem

A reinforcing carbon fiber sheet of the present invention includes: a carbon fiber filament group arrayed in parallel in one direction; and a thermoplastic adhesive present on at least part of the carbon fiber filament group in a direction across the carbon fiber filament group to unite the carbon fiber filament group.

### Effects of the Invention

The reinforcing carbon fiber sheet of the present invention is configured by arraying the carbon fiber filament group in one direction, and having the thermoplastic adhesive present on at least part of the carbon fiber filament group in a direction across the carbon fiber filament group so that they constitute a sheet as a whole. Thus, the reinforcing carbon fiber sheet can be thin, have good handling properties, and easily adhere to a substance to be reinforced. In other words, the carbon fiber filament group is arrayed in parallel in one direction, and the carbon fiber filaments are united by the thermoplastic adhesive to be formed into a sheet. Thus, the reinforcing carbon fiber sheet has flexibility and good handling properties as a sheet. Moreover, since the substance uniting the carbon fiber filaments is a thermoplastic adhesive, the reinforcing carbon fiber sheet can easily adhere to a substance to be reinforced such as iron, aluminum, wood, rubber or resin.

### Brief Description of Drawings

[FIG. 1] FIG. 1A is a schematic plan view illustrating a surface of a reinforcing sheet in one embodiment of the present invention, and FIG. 1B is a schematic enlarged cross-sectional view taken along a line I-I in FIG. 1A.
[FIG. 2] FIGS. 2A to 2D are schematic plan views illustrating surfaces of reinforcing sheets in other embodiments of the present invention.
[FIG. 3] FIG. 3 is a schematic cross-sectional view illustrating an application example of a reinforcing sheet in one embodiment of the present invention.
[FIG. 4] FIG. 4 is a schematic process diagram illustrating a production method of a reinforcing sheet in one embodiment of the present invention.

### Description of the Invention

In a reinforcing sheet of the present invention, a carbon fiber filament group is arrayed in parallel in one direction, and a thermoplastic adhesive is present on at least part of the carbon fiber filament group in a direction across the carbon fiber filament group, so that the carbon fiber filament group and the thermoplastic adhesive constitute a sheet as a whole. Here, the "carbon fiber filament group" means a plurality of carbon fiber filaments. For example, the carbon fiber filament group is composed of, e.g., 6K (6000 filaments), 12K (12000 filaments), 24K (24000 filaments), 48K (48000 filaments), 50K (50000 filaments), or more. Preferably, the carbon fiber filament group is composed of 12K to 50K and has a fineness of 800 g/ 1000 m to 4000 g/ 1000 m. In the carbon fiber filament group, filaments are arrayed in parallel in one direction.

Since the thermoplastic adhesive is present on at least part of the carbon fiber filament group in a direction across the carbon fiber filament group, the carbon fiber filament group is united in a transverse direction, and they constitute a sheet as a whole. The sheet obtained thereby exhibits good handling properties and workability when being adhered to a substance to be reinforced. Moreover, since the thermoplastic adhesive is present in the sheet, the sheet is soft and can follow the shape of the substance to be reinforced even when the surface of the substance is slightly uneven or curved.

The reinforcing sheet has a thickness of preferably 0.02 to 0.5 mm, and more preferably 0.02 to 0.3 mm. The carbon fiber filament group arrayed in parallel has a thickness of preferably 0.02 to 0.2 mm. Within the above ranges of the thicknesses, the reinforcing sheet can be lightweight, and resin can be easily impregnated. Moreover, the reinforcing sheet has a mass per unit area of preferably 30 to 150 g/m². Within the above range of the mass, the reinforcing sheet can be lightweight. To increase the thickness and mass, two or more reinforcing sheets are stacked one on top of another.

The carbon fiber filament group and the thermoplastic adhesive are in a ratio of preferably 95 to 20% by mass: 5 to 80% by mass, and more preferably 95 to 50% by mass: 5 to 50% by mass based on 100% by mass of the reinforcing carbon fiber sheet. Within the above range, the reinforcing sheet can exhibit sufficient properties for reinforcement such as strength in practical use.

The thermoplastic adhesive is preferably a solvent-type adhesive, a hot melt-type adhesive, or a combination of these. The hot melt-type adhesive is preferred in terms of work environment, but the solvent-type adhesive is also preferred because it can lower viscosity and can be easily impregnated between the fibers of the carbon fiber filament group. As an example, the solvent-type adhesive preferably includes 15 to 25% by mass of a thermoplastic component, 30 to 40% by mass of toluene, 30 to 40% by mass of n-hexane, 5 to 15% by mass of a tackifier such as rosin ester, and 2% by mass or less of a solid paraffin. The viscosity is preferably 10 to 2000 mPa•s (25°C).

Examples of the thermoplastic adhesive include: rubber adhesives such as styrene-ethylene/butylene-styrene block copolymer-based elastomers, chloroprene-based elastomers, nitrile-based elastomers, ethylene-propylene-based elastomers, chlorosulfonated polyethylene-based elastomers, epichlorohydrin-based elastomers, and acrylic-based elastomers; ethylene-based copolymer adhesives such as ionomer-based adhesives, ethylene-vinyl acetate resins, ethylene-ethyl acrylate copolymer resins, and ethylene-methyl acrylate copolymer resins; and acid-modified polyolefin adhesives obtained by grafting and/or adding an unsaturated carboxylic acid (e.g., maleic acid, phthalic acid) or a derivative thereof onto a polyolefin, etc. Among these, the styrene-ethylene/butylene-styrene block copolymer-based elastomers and maleic acid-modified polypropylene-based adhesives are preferred.

It is preferable in terms of sheet formation that the thermoplastic adhesive is present on the carbon fiber filament group in any of the following: (1) arranged on the entire surface of the carbon fiber filament group; (2) arranged linearly in a direction transverse to the length direction of the carbon fiber filament group; (3) arranged linearly or in stripes in a direction oblique to the length direction of the carbon fiber filament group; (4) arranged in a meandering line relative to the length direction of the carbon fiber filament group; (5) arranged in a grid shape relative to the carbon fiber filament group; (6) arranged in a dot shape relative to the carbon fiber filament group; and (7) any combination of the above (1) to (6). However, the arrangement is not particularly limited as long as the thermoplastic adhesive connects the carbon fiber filament group in the transverse direction.

A method for producing the reinforcing sheet of the present invention includes spreading the carbon fiber filament group (tow) so that the filaments are arrayed in parallel in one direction. As an example, the carbon fiber filament group is spread according to the carbon-fiber opening method (JP 2010-270420 A). In the case of using a plurality of pairs of nip rolls, the carbon fiber filament group is gradually opened. Alternatively, the carbon fiber filament group may be opened by blowing air onto the carbon fiber filament group, together with the use of rolls.

The method subsequently includes applying an adhesive to one of the surfaces of the carbon fiber filament group arrayed in parallel in one direction. The application method of the solvent-type adhesive may be, e.g., a dipping method, a spraying method, or a doctor knife method. The application method of the hot melt-type adhesive may be, e.g., a method in which a powder, film, or thread-like adhesive is applied to at least part of, preferably the entire surface of, the carbon fiber filament group in the length direction and melt by heat rolls.

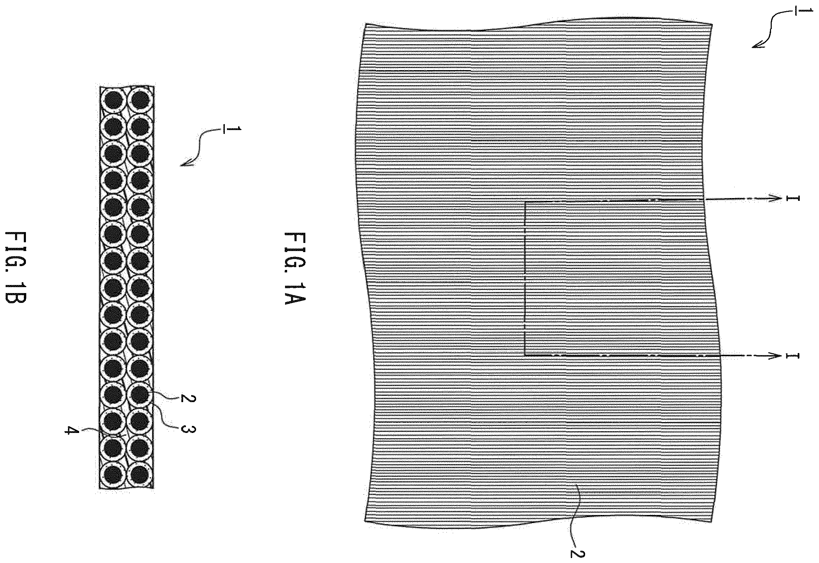

Next, the present invention will be described with reference to the drawings. In the drawings, the same components are denoted by the same reference numerals. FIG. 1A is a schematic plan view illustrating a surface of a reinforcing sheet in one embodiment of the present invention, and FIG. 1B is a schematic enlarged cross-sectional view taken along a line I-I in FIG. 1A. In a reinforcing sheet 1, filaments 2 of a carbon fiber filament group are arrayed in parallel in one direction, and a thermoplastic adhesive layer 4 is placed on the entire surface of the arrayed filaments 2 to unite the filaments 2. As illustrated in FIG. 1B, preferably, the reinforcing sheet includes a minimum amount of the carbon fibers required to produce a reinforcing effect. For example, the reinforcing sheet includes two rows of the carbon fiber filaments 2 in the thickness direction. Since a sizing layer 3 such as an epoxy-based resin is present on the surface of the carbon fiber filaments 2, the sizing layer 3 and the thermoplastic adhesive layer 4 on the surface of the sizing layer 3 strongly adhere to each other. The reinforcing sheet 1 may be used singly, or a plurality of the reinforcing sheets 1 may be stacked one on top of another. In the case of using a plurality of the reinforcing sheets, the carbon fiber filament groups may be stacked in different orientations.

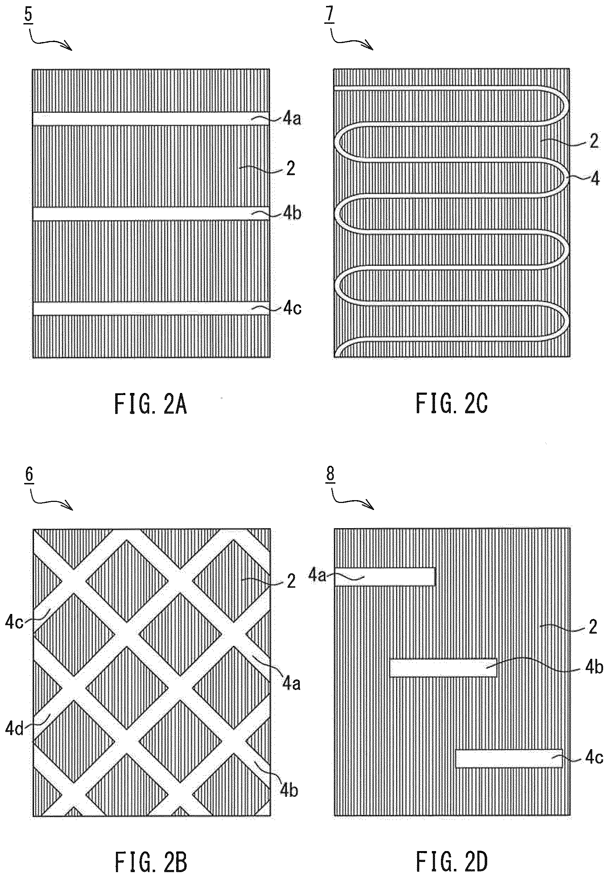

FIG. 2A is a schematic plan view illustrating a surface of a reinforcing sheet 5 in another embodiment of the present invention, in which thermoplastic adhesive layers 4a-4c are arranged linearly in a direction transverse to the length direction of the carbon fiber filament 2 group. FIG. 2B is a schematic plan view illustrating a surface of a reinforcing sheet 6 in still another embodiment, in which thermoplastic adhesive layers 4a-4d are arranged in stripes in a direction oblique to the length direction of the carbon fiber filament 2 group. FIG. 2C is a schematic plan view illustrating a surface of a reinforcing sheet 7 in still another embodiment, in which thermoplastic adhesive layers 4a-4d are arranged in a meandering line relative to the length direction of the carbon fiber filament 2 group. FIG. 2D is a schematic plan view illustrating a surface of a reinforcing sheet 8 in still another embodiment, in which thermoplastic adhesive layers 4a-4c are arranged partially linearly in a direction transverse to the length direction of the carbon fiber filament 2 group. Besides these, thermoplastic adhesive layers may be arranged on the carbon fiber filament group in a grid shape or a dot shape, or in a combination of the above.

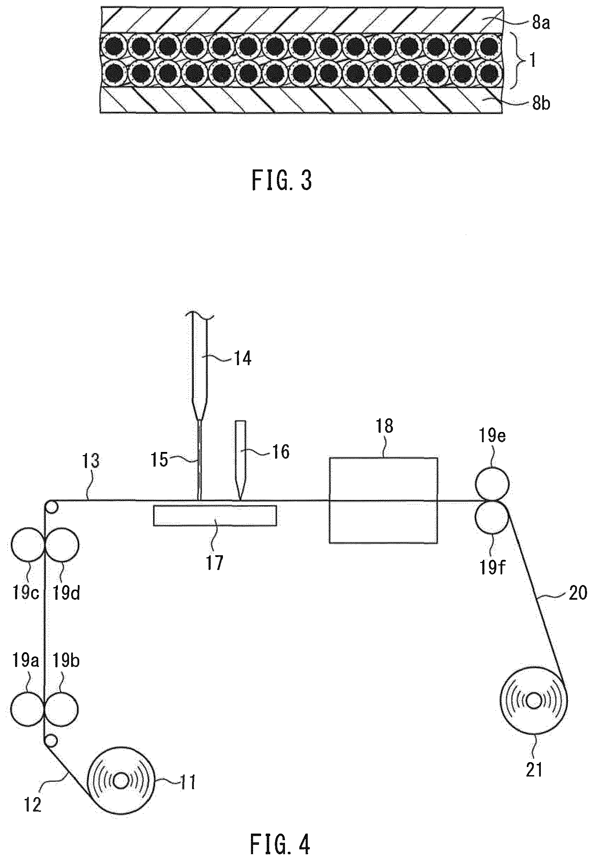

FIG. 3 is a schematic cross-sectional view illustrating an application example of a reinforcing sheet in one embodiment of the present invention. A composite material illustrated in FIG. 3 is obtained by arranging a different material such as metal, plastic, or wood, on the both surfaces of the reinforcing sheet 1 illustrated in FIG. 1B and uniting them by heating. 8a and 8b are layers of the different material.

FIG. 4 is a schematic process diagram illustrating a production method of a reinforcing sheet in one embodiment of the present invention. A carbon fiber filament group 12 is drawn out from a plurality of yarn rolls 11, and passes between nip rolls 19a and 19b and between nip rolls 19c and 19d to be opened so that the filaments are arrayed in parallel in one direction. A solvent-type thermoplastic rubber adhesive 15 is supplied onto the surface of the spread carbon fiber filament group 13 from a nozzle 14. The adhesive is applied to the carbon fiber filament group 13 in a uniform thickness by a plate 17 and a doctor knife 16 to impregnate the adhesive between the fibers. The solvent-type adhesive may include, e.g., 15 to 25% by mass of a thermoplastic rubber component, 30 to 40% by mass of toluene, 30 to 40% by mass of n-hexane, 5 to 15% by mass of a tackifier such as rosin ester, and 2% by mass or less of a solid paraffin. The carbon fiber filament group 13 to which the adhesive 15 has been applied passes through a hot air dryer 18 to remove the solvent, and passes between nip rolls 19e and 19f. Thus, a reinforcing sheet 20 is obtained and taken up by a winder 21. In the case of using a powder hot melt-type adhesive instead of the solvent-type adhesive, the adhesive is supplied not by the nozzle but by shaking the adhesive over the surface of the carbon fiber filament group 13, followed by melt adhesion by heater drying, etc. In the case of using a film hot melt-type adhesive, after the passage between the nip rolls 19a and 19b and between the nip rolls 19c and 19d, the film adhesive is stacked on the carbon fiber filament group, followed by melt adhesion of the film by passage between heat rolls.

### Examples

Hereinafter, the present invention will be described specifically by way of examples. However, the present invention is not limited to the following examples.

### (Example 1)

A carbon fiber filament group (15K) having a total fineness of 1000 g/1000 m manufactured by Mitsubishi Chemical Corporation was used as reinforcing fibers, and the carbon fiber filament group was formed into a reinforcing sheet by the method illustrated in FIG. 4. As a thermoplastic adhesive, "ARON MELT PPET (registered trademark) 150SG30" (trade name) manufactured by TOAGOSEI CO., LTD. (including 15 to 25% by mass of a styrene-ethylene/butylene-styrene block copolymer, 30 to 40% by mass of toluene, 30 to 40% by mass of n-hexane, 5 to 15% by mass of a tackifier such as rosin ester, and 2% by mass or less of a solid paraffin, and having a viscosity of 220 mPa•s (25°C)) was used. The adhesive was applied to the opened carbon fiber filament group in a ratio of 5 g/m² with respect to the carbon fiber filament group on a dry mass basis. The line speed was 10 m/min. The obtained reinforcing sheet was illustrated in FIGS. 1A and 1B. The reinforcing sheet was 100 mm wide and 0.03 mm thick, and had a mass per unit area of 55 g/m². The carbon fiber filament group and the thermoplastic adhesive were in a ratio of 91% by mass: 9% by mass based on 100% by mass of the reinforcing carbon fiber sheet.

### (Example 2)

The same reinforcing fibers as those in Example 1 were used in Example 2. A reinforcing carbon fiber sheet of Example 2 was produced using the reinforcing fibers and a film hot melt-type adhesive. Specifically, an opened carbon fiber filament group was cut into a 30 cm square, on which a film adhesive (thickness: 50 µm, mass per unit area: 45 g/m²) made from a maleic acid-modified polypropylene resin was placed. Then, it was heated at 140°C under a pressure of 3 Mpa by a hot press to unite the reinforcing fibers with the film hot melt-type adhesive, and thus a reinforcing carbon fiber sheet was obtained. The carbon fiber filament group and the thermoplastic adhesive were in a ratio of 53% by mass: 47% by mass based on 100% by mass of the reinforcing carbon fiber sheet.

The reinforcing sheets obtained were thin, soft and had good handling properties, and easily adhered to substances to be reinforced such as iron, aluminum, wood, rubber and resin.

### Industrial Applicability

The reinforcing sheet of the present invention can be widely applied to, e.g., reinforcing materials such as various boards (plate-like members), car body reinforcing materials, various sporting goods such as golf club shafts and fishing rods, aircraft, automobiles, and pressure vessels.

### Description of Reference Numerals

- 1,5-8,20: reinforcing sheets
- 2: carbon fiber filaments
- 3: sizing layer
- 4, 4a-4d: thermoplastic adhesive layers
- 8a, 8b: layers of different material
- 11: yarn roll
- 12: carbon fiber filament group
- 13: spread carbon fiber filament group
- 14: nozzle
- 15: thermoplastic adhesive
- 16: doctor knife
- 17: plate
- 18: hot air dryer
- 19a-19b, 19c-19d, 19e-19f: nip rolls
- 21: winder

## Claims

1. A reinforcing carbon fiber sheet comprising: a carbon fiber filament group arrayed in parallel in one direction; and a thermoplastic adhesive present on at least part of the carbon fiber filament group in a direction across a length direction of the carbon fiber filament group to unite the carbon fiber filament group.

2. The reinforcing carbon fiber sheet according to claim 1, wherein the reinforcing carbon fiber sheet has a thickness of 0.02 to 0.5 mm.

3. The reinforcing carbon fiber sheet according to claim 1 or 2, wherein the reinforcing carbon fiber sheet has a mass per unit area of 30 to 150 g/m².

4. The reinforcing carbon fiber sheet according to any one of claims 1 to 3, wherein the carbon fiber filament group and the thermoplastic adhesive are in a ratio of 95 to 20% by mass: 5 to 80% by mass based on 100% by mass of the reinforcing carbon fiber sheet.

5. The reinforcing carbon fiber sheet according to any one of claims 1 to 4, wherein the thermoplastic adhesive is at least one selected from solvent-type adhesives and hot melt-type adhesives.

6. The reinforcing carbon fiber sheet according to any one of claims 1 to 5, wherein the thermoplastic adhesive is at least one selected from rubber adhesives and acid-modified polyolefin adhesives.

7. The reinforcing carbon fiber sheet according to any one of claims 1 to 6, wherein the thermoplastic adhesive is present on an entire surface of the carbon fiber filament group.

8. The reinforcing carbon fiber sheet according to any one of claims 1 to 7, wherein, when the thermoplastic adhesive is present on part of the carbon fiber filament group, the thermoplastic adhesive is present in any of the following (1) to (6):
(1) arranged linearly in a direction transverse to the length direction of the carbon fiber filament group;
(2) arranged linearly or in stripes in a direction oblique to the length direction of the carbon fiber filament group;
(3) arranged in a meandering line relative to the length direction of the carbon fiber filament group;
(4) arranged in a grid shape relative to the carbon fiber filament group;
(5) arranged in a dot shape relative to the carbon fiber filament group; and
(6) any combination of the above (1) to (5).
